# EUROPEAN PATENT APPLICATION

(11) **EP 2 903 260 A1**
(43) Date of publication of application: **05.08.2015**
(21) Application number: 13840489.2
(22) Date of filing: 23.08.2013
(51) Int. Cl.: H04N 7/173

(54) **MULTI-SPEED PLAYING METHOD, DEVICE AND SYSTEM**

(30) Priority: 27.09.2012 CN 201210369049
(71) Applicant: ZTE Corporation, Guangdong Province 518057 (CN)
(72) Inventor: GUO, Panfeng, Shenzhen Guangdong Proveince 518057 (CN); JIA, Xia, Shenzhen Guangdong Province 518057 (CN); SUN, Jian, Shenzhen Guangdong Province 518057 (CN); LI, Mingdong, Shenzhen Guangdong Province 518057 (CN); LIU, Haijun, Shenzhen Guangdong Province 518057 (CN)
(74) Representative: Novagraaf Technologies
(86) International application number: PCT/CN2013/082224
(87) International publication number: WO 2014/048198

(57) **Abstract**

A method, device and system for multi-speed playing are disclosed. The method includes the following steps: a client reads a multi-speed media file of a program and plays the program on a second screen in a multi-speed mode, wherein the client includes a first screen and the second screen; the client plays the program on the first screen in a normal-speed mode. The present invention solves the problems in related art of single multi-speed playing mode and poor user experience, increases flexibility of the multi-speed playing mode and improves the user experience.

## Description

### Technical Field

The present invention relates to the field of communications, including, e.g., a method, device and system for multi-speed playing.

### Background

With the development of technology, the adaptive streaming media technology based on Hypertext Transfer Protocol (HTTP) has become a trend. At present, the implementation mode of the mainstream adaptive streaming media solution is: a mode of storing in a server side encoded media files with different code rates and parsed files. Wherein, application of Http Living Streaming based on Apple is relatively wide. There are stripped files of the media files with different code rates stored in the server side, wherein the stripped files include ts stripped file, slave m3u8 parsed file and master m3u8 parsed file. Wherein, each slave m3u8 parsed file corresponds to a code rate, and the Uniform Resource Locator (URL), information about length of time and so on of each ts strip of the media file of this code rate are mainly recorded in each slave m3u8 parsed file; the URL of the slave m3u8 parsed file corresponding to the media file of each code rate, the corresponding code rate, program information and so on are mainly recorded in the master m3u8 parsed file. When a client performs media playing, it firstly downloads from the server side and parses the master m3u8 parsed file and the slave m3u8 parsed file to acquire URL, time and related information of each media stripped file with corresponding code rate, and then downloads from a server and plays the stripped files with different code rates according to the current network state and parsed information, thereby implementing adaptation of code rate.

At present, it is implemented playing of adaptive code rate better through these mainstream adaptive streaming media solutions, but it is not implemented multi-speed playing. The following conclusion is got by looking up information to analyze: there are also related art for performing multi-speed playing (fast forward and fast backward) of streaming media. The basic solution of these technologies is: storing in the server side media files which have been encoded in a multi-speed mode, and writing URL, code rate and other information of these media files to the parsed files; when the client requests multi-speed playing, downloading and playing the media files which have been encoded in the multi-speed mode in the server.

However, there are the following disadvantages in the above technical solutions at present: relatively poor user experience, which is mainly reflected in single showing effect and mode when the client plays in the multi-speed mode. Aiming at the problems in related art of single multi-speed playing mode and poor user experience, an effective solution has not been presented currently.

### Summary

Aiming at the problems in related art of single multi-speed playing mode and poor user experience, a method, device and system for multi-speed playing are provided in the present invention, for at least solving the above problems.

According to an aspect of the present invention, a method for multi-speed playing is provided; the method includes that: a client reads a multi-speed media file of a program and plays the program on a second screen in a multi-speed mode, wherein the client includes a first screen and the second screen; and the client plays the program on the first screen in a normal-speed mode.

According to an embodiment of the present invention, while the program is played on the second screen in the multi-speed mode, it is played on the first screen in the normal-speed mode.

According to an embodiment of the present invention, the client playing the program on the first screen in the normal-speed mode includes that: the client acquires a time point that is determined by a user to start to play in the normal-speed mode the program which is played on the second screen in the multi-speed mode; and the client plays the program in the normal-speed mode on the first screen from the time point.

According to an embodiment of the present invention, the second screen is a window on the first screen; or, the second screen is a screen of a terminal which is different from the terminal where the first screen is.

According to an embodiment of the present invention, before the client reads the multi-speed media file of the program and plays the program on the second screen in the multi-speed mode, the method further includes that: a server generates multiple multi-speed media files with different multi-speeds to the program, wherein code rates of the multiple multi-speed media files with different multi-speeds are the same.

According to an embodiment of the present invention, the code rate and/or resolution ratio of the multiple multi-speed media files with different multi-speeds is less than that of the media file corresponding to the program played in the normal-speed.

According to an embodiment of the present invention, the client reading the multi-speed media file of the program and playing the program on the second screen in the multi-speed mode includes that: the client reads the multi-speed media file of the program from a multi-speed server and plays the program on the second screen in the multi-speed mode, wherein the multi-speed server is a server for storing the multi-speed media file of the program.

According to another aspect of the present invention, a device for multi-speed playing is provided; the device is located in a client and includes: a first playing component, which is configured to read the multi-speed media file of the program and play the program on the second screen in a multi-speed mode, wherein the client includes a first screen and the second screen; and a second playing component, which is configured to play the program on the first screen in a normal-speed mode.

According to an embodiment of the present invention, the second playing component includes: an acquiring element, which is configured to acquire a time point that is determined by a user to start to play in the normal-speed mode the program which is played on the second screen in the multi-speed mode; and a playing element, which is configured to play the program in the normal-speed mode on the first screen from the time point.

According to an embodiment of the present invention, the second screen is a window on the first screen; or, the second screen is a screen of a terminal which is different from the terminal where the first screen is.

According to a third aspect of the present invention, a system for multi-speed playing is provided; the system includes the above device for multi-speed playing, and further includes a server side; wherein, the server side includes: a generating component, which is configured to generate multiple multi-speed media files with different multi-speeds to the program, wherein code rates of the multiple multi-speed media files with different multi-speeds are the same, and the code rate and/or resolution ratio of the multiple multi-speed media files with different multi-speeds is less than that of the media file corresponding to the program played in the normal-speed.

According to an embodiment of the present invention, the server side includes a multi-speed server and an adaptive code rate server; wherein the multi-speed server is configured to store the multi-speed media file of the program, and the adaptive code rate server is configured to store the media file corresponding to the program played in the normal-speed.

In the present invention, a client is adopted to read a multi-speed media file of a program and play the program on a second screen in a multi-speed mode, wherein the client includes a first screen and the second screen; and the client plays the program on the first screen in a normal-speed mode, so that the present invention solves the problems in related art of single multi-speed playing mode and poor user experience, increases flexibility of the multi-speed playing mode and improves the user experience.

### Brief Description of the Drawings

The accompanying drawings described here are used for providing a deeper understanding of the present invention, and constitute a part of the application; schematic embodiments of the present invention and description thereof are used for illustrating the present invention and not intended to form improper limit to the present invention. In the accompanying drawings:
Fig. 1 is a flowchart of a method for multi-speed playing according to the embodiment of the present invention;
Fig. 2 is a structure diagram of a device for multi-speed playing according to the embodiment of the present invention;
Fig. 3 is a preferred structure diagram of a second playing component according to the embodiment of the present invention;
Fig. 4 is a structure diagram of a system for multi-speed playing according to the embodiment of the present invention;
Fig. 5 is a preferred structure diagram of a system for multi-speed playing according to the embodiment of the present invention;
Fig. 6 is a structure diagram of a system for implementing adaptive streaming media multi-speed playing according to a second embodiment of the present invention;
Fig. 7 is a structure diagram of a client according to a second embodiment of the present invention; and
Fig. 8 is a flowchart of interaction between a client and a server according to a second embodiment of the present invention.

### Detailed Description of the Embodiments

The present invention is elaborated below with reference to the accompanying drawings and in combination with embodiments. Note that, embodiments and features in embodiments in the application can be combined with each other on condition of not conflicting.

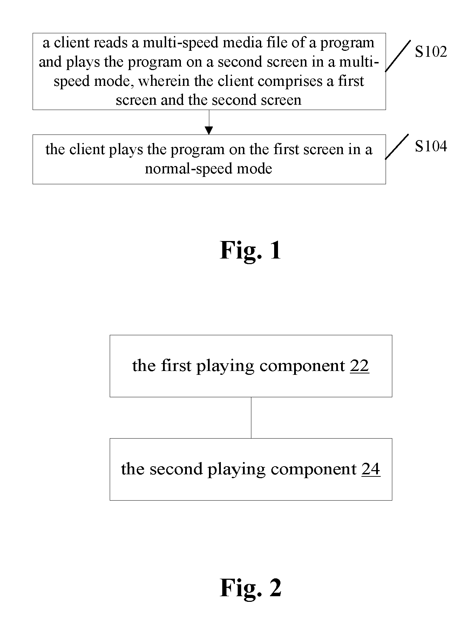

A method for multi-speed playing is provided in the present embodiment; Fig. 1 is a flowchart of the method for multi-speed playing according to the embodiment of the present invention; as shown in Fig. 1, the method includes steps as follows:
S102: a client reads a multi-speed media file of a program and plays the program on a second screen in a multi-speed mode, wherein the client includes a first screen and the second screen;
S104: the client plays the program on the first screen in a normal-speed mode.

Through the above steps, the program is played on the first screen in the normal-speed mode, and it is played on the second screen in the multi-speed mode in the client, which provides technical support for users to quickly browse subsequent content of the program while watching the program, solves the problems in related art of single multi-speed playing mode and poor user experience, increases flexibility of the multi-speed playing mode and improves the user experience.

Preferably, when on the second screen of the client, it is played in the multi-speed mode, the first screen still can be played with adaptive code rate. By this way, a user can perform multi-speed playing without influencing normal watching of program.

As a preferred implementation mode, in the process of the user watching a program played on the second screen in the multi-speed mode, if the user finds content of interest, the client may acquire a time point that is determined by the user to start to play in the normal-speed mode the program which is played on the second screen in the multi-speed mode, and then plays the program in the normal-speed mode on the first screen from the time point. Through this mode, the program which is played on the second screen in the multi-speed mode may be switched, at the time point, to the first screen to continue to play in the normal-speed mode, without needing the user to manually adjust to the interested time point on the first screen, which enables the user to quickly skip an uninterested part of the program, and precisely skip to the interested time point. Preferably, after performing normal-speed playing on the first screen from the time point, the client may hide the second screen; it is also the user's choice as to whether to hide the second screen.

As a preferred implementation mode, the above second screen may be a window on the first screen, for example, the second screen is a screen window (small screen) superposed, suspended or embedded on the first screen (large screen); or, the second screen may also be a screen of a terminal which is different from the terminal where the first screen is, for example, the first screen is a television, then the second screen may be a user's handheld mobile terminal (e.g., pad/phone).

Although for the normal-speed playing of adaptive code rate, the server side is required to store the media files with various code rates played in the normal-speed mode, considering that the user performing fast forward and fast backward mainly aims to browse instead of specially focusing on articulation and other attributes, so it is not necessary to store more multi-speed files with higher code rate at the server side; likewise, it is also to waste the storage space for the client downloading and playing by the client these media files for playing in the multi-speed mode; besides, at the client, when a client player performs multi-speed playing, it is also to occupy more CPU processing capacity for downloading, decoding and playing these media files with higher code rate and higher resolution ratio; thus, as a preferred implementation mode, when the server generates multiple multi-speed media files with different multi-speeds to the program, it can also make the code rates of the multiple multi-speed media files with different multi-speeds the same. Through this mode, storage resources of the server side and the client can be saved.

Preferably, the code rate and/or resolution ratio of the multiple multi-speed media files with different multi-speeds may be less than that of the media files corresponding to the program played in the normal-speed. Because the user does not care too much for the code rate when watching the program which is played on the second screen in the multi-speed mode, adopting the mode may further save a lot of storage resources of the server side and the client without a significant impact on the user experience, improves the resource utilization and improves the efficiency of reading the multi-speed media file for the client.

The above multi-speed media file of the program and the media file corresponding to the program played in the normal-speed can be stored in the same storage component of the server, they can also be stored in different storage components separately, wherein the storage component may be either logical virtual component or physical entity component. As a preferred implementation mode, the multi-speed media file of the program and the media file corresponding to the program played in the normal-speed can be stored in different storage components; preferably, the multi-speed media file of the program may be stored on a single server (called a multi-speed server for short in this specification); the multi-speed server is configured to store the multi-speed media file and the parsed file. The specific physical deployment of the server may be diverse. For example, the multi-speed server and the adaptive code rate server may be deployed on the same physical unit or different physical units. Preferably, the multi-speed server may be deployed on an edge node of CDN, so as to quickly respond to a multi-speed playing request from the client, and conveniently manage the multi-speed media stripped file. Because all the multi-speed media files are stored in the multi-speed server through this mode, when the client reads the multi-speed media file which is played on the second screen, the reading speed is higher and the efficiency is higher. Besides, because the multi-speed server is independent of other server (e.g., the adaptive code rate server) at the server side, the other server at the server side in the current system architecture is not influenced, and the cost of system is reduced.

Corresponding to the above method, a device for multi-speed playing is also provided in the present embodiment; the device is in the client and configured to implement the above embodiment and preferred implementation mode, which has been illustrated, so it will not be repeated here. As used below, the term "component" can implement combination of software and/or hardware with predetermined function. Although the device described in the following embodiment is implemented by software better, implementation of hardware or combination of software and hardware is also possible and conceived.

Fig. 2 is a structure diagram of the device for multi-speed playing according to the embodiment of the present invention; as shown in Fig. 2, the device includes: a first playing component 22 and a second playing component 24; each component is elaborated below.

The first playing component 22 is configured to read the multi-speed media file of the program and play the program on the second screen in the multi-speed mode, wherein the client includes a first screen and the second screen; the second playing component 24 is connected with the first playing component 22 and configured to play the program on the first screen in the normal-speed mode.

Through the above modules of the present embodiment, the client adopts the second playing component 24 to perform normal-speed playing on the first screen, and adopts the first playing component 22 to perform multi-speed playing on the second screen, thereby not influencing the user to watch the program normally while performing multi-speed playing, providing technical support for users to quickly browse subsequent content of a program while watching the program, solving the problems in related art of single multi-speed playing mode and poor user experience, increasing flexibility of the multi-speed playing mode and improving the user experience.

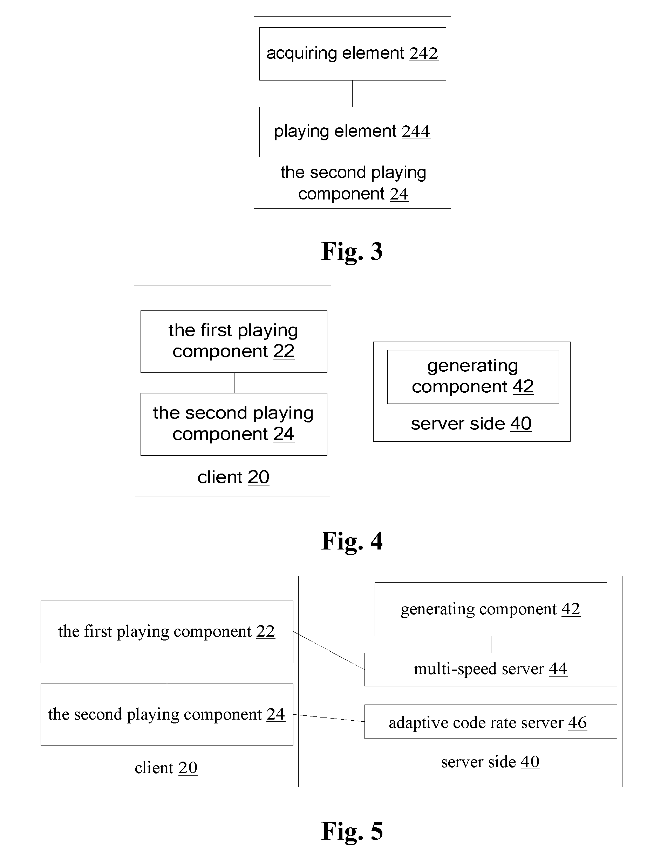

Fig. 3 is a preferred structure diagram of the second playing component 24 according to the embodiment of the present invention; as shown in Fig. 3, the second playing component 24 may include: an acquiring element 242, which is configured to acquire a time point that is determined by a user to start to play in the normal-speed mode the program which is played on the second screen in the multi-speed mode; and a playing element 244, which is connected with the acquiring element 242 and configured to play the program in the normal-speed mode on the first screen from the time point.

Preferably, the second screen is a window on the first screen; or, the second screen is a screen of a terminal which is different from the terminal where the first screen is.

A system for multi-speed playing is further provided in the present embodiment; Fig. 4 is a structure diagram of the system for multi-speed playing according to the embodiment of the present invention; as shown in Fig. 4, the system includes the device for multi-speed playing (which is illustrated in Fig. 4 by taking the device for multi-speed playing in Fig. 2 for example) which is in the client 20, and the server side 40; wherein, the server side 40 includes: a generating component 42, which is configured to generate multiple multi-speed media files with different multi-speeds to the program, wherein the code rates of the multiple multi-speed media files with different multi-speeds are the same, and the code rate and/or resolution ratio of the multiple multi-speed media files with different multi-speeds is less than that of the media file corresponding to the program played in the normal-speed.

Fig. 5 is a preferred structure diagram of a system for multi-speed playing according to the embodiment of the present invention; as shown in Fig. 5, the server side 40 may include the multi-speed server 44 and the adaptive code rate server 46; wherein, the multi-speed server are connected the generating component and 42 and the first playing component 22 and configured to store the multi-speed media file of the program; the adaptive code rate server is connected with the second playing component 24 and configured to store the media file corresponding to the program played in the normal-speed.

Illustration is given below in combination with the preferred embodiments; the following preferred embodiments combine the above embodiments and preferred implementation mode thereof.

In the following preferred embodiments, a method and device for implementing multi-speed playing of adaptive streaming media are provided; the method and device for implementing multi-speed playing of adaptive streaming media can implement multi-speed (fast forward, fast backward) playing on the basis of adaptive streaming media solution, which greatly improves the user experience.

### Embodiment 1

In the present preferred embodiment, a media file generating component is provided; the component mainly includes:
an adaptive code rate file generating component, which takes charge of generating media files with different code rates, and stripping the media file of each code rate; as for each stripped file with corresponding code rate, the component generates a slave parsed file used for recording the URL and length of time of each stripped file and finally generates a master parsed file used for recording the URL and code rate of each slave parsed file, and program information; and
a multi-speed file generating component (implementing the function of the generating component 52), which takes charge of generating a media file with single code rate (which is dedicated for implementing multi-speed playing in the present preferred embodiment); the code rate and resolution ratio of the media file are much less than that of the media file in the adaptive code rate file generating component; then, the multi-speed file generating component also performs multi-speed encoding to the media file of this code rate to generate multi-speed (fast forward, fast backward) media files, such as 2, 4, 6, 8; at last, the multi-speed file generating component strips these multi-speed media files, as for each multi-speed file, generates a slave parsed file used for recording the URL and length of time of the multi-speed media stripped file, and finally generates a master parsed file used for recording the URL and multi-speed of each slave parsed file and program information.

The above target multi-speed media file of the program and the media file corresponding to the program played in the normal-speed can be stored in the same storage component of the server, they can also be stored in different storage components separately, wherein the storage component may be either logical virtual component or physical entity component. As a preferred implementation mode, the multi-speed media file of the program and the media file corresponding to the program played in the normal-speed can be stored in different storage components; preferably, the multi-speed media file of the program may be stored on a single server (called a multi-speed server for short in this specification). In the present preferred embodiment, illustration is given by taking that the multi-speed media file is stored on the single server for example, a server (implementing the function of the server side 40) is provided, which includes:
an adaptive code rate server, which is configured to store the media stripped file and the parsed file of each code rate generated by the adaptive code rate file generating component, and respond to a normal adaptive code rate playing request from the client; and
a multi-speed server (implementing the function of the multi-speed server 42), which is a single server and may be configured to store the media stripped file and the parsed file of each multi-speed generated by the multi-speed file generating component, and respond to a multi-speed playing request from the client; the server may be deployed on an edge node of CDN, so as to quickly respond to the multi-speed playing request from the client, and conveniently manage the multi-speed media stripped file.

Note that, the physical deployment of the server is diverse. For example, the multi-speed server and the adaptive code rate server may be deployed on the same physical unit or different physical units.

In the present preferred embodiment, a client (implementing the function of the client 20) is further provided.

Considering that the user performing fast playing only aiming to fast browse, so usually it is not necessary to exaggerate and display the media file for multi-speed playing by the whole large screen of the client (e.g., TV/PC, but not limited to TV/PC); thus, the client performing fast playing may be implemented by the following two ways:
Way 1: adopting a large screen and a small screen; a small-screen window is superposed, embedded or suspended on the large screen of the client for multi-speed playing specially; display position and size of the small-screen window may be changed on the large screen of the client according user preference; by this way, the client takes charge of interacting with the adaptive code rate server and the multi-speed server of the server side, downloading the corresponding media stripped file, and performing adaptive code rate playing on the large screen; when the user requests multi-speed playing, the small-screen window is displayed, and multi-speed playing at the corresponding time point is performed in the small-screen window; when the user finds content of interest in the small-screen window, the content is switched to the large screen to be played in the normal adaptive code rate at the corresponding time point while the small-screen window may be hidden according to the user's choice;
Way 2: adopting the screen (called the second screen for short) of the second terminal; the second screen (e.g., Pad/Phone, but not limited to Pad/Phone) of the user is used for multi-speed playing; by this way, the large-screen client interacts with the adaptive code rate server to perform the normal adaptive code rate playing; when the user requests multi-speed playing, the second-screen client takes charge of interacting with the multi-speed server to perform multi-speed playing at the corresponding time point; when the user finds content of interest in process of multi-speed playing of the second-screen client, the content is switched to the large-screen client to be played in the normal adaptive code rate at the corresponding time point while the second-screen client may select to pause or continue playing.

The inter-coordination among the multi-speed media file, the server and the client and the inter-coordination between the large-screen client and the second-screen client can better solve the disadvantages of the current adaptive streaming media solution and technology, and greatly improves the user experience. The beneficial effects of the present preferred embodiment may include the following aspects:
firstly, great improvement of the user experience, which is mainly reflected in display modes of the large screen, the small screen and the second screen of the client; the small-screen window or the second screen is adopted to perform multi-speed playing, while the large screen may continue playing in an adaptive code rate mode; when the user finds content of interest in the small-screen window or the second screen, the content is switched to the large screen to carefully appreciate in the adaptive code rate mode;
secondly, improvement of the resource utilization; in the present preferred embodiment, code rate and resolution ratio of the media file for multi-speed playing are much less than that of the adaptive code rate media file, which solves disadvantages in related art of wasting storage space, larger CPU utilization and so on; and
thirdly, convenience of deploying server; in the present preferred embodiment, the multi-speed server is separately configured to store the multi-speed stripped file; on the basis of the adaptive streaming media solution, multi-speed playing can be implemented more easily without need of modifying the original adaptive streaming media server.

### Embodiment 2

In the present preferred embodiment, system structure, client structure, and interaction flow between the server and the client are further elaborated.

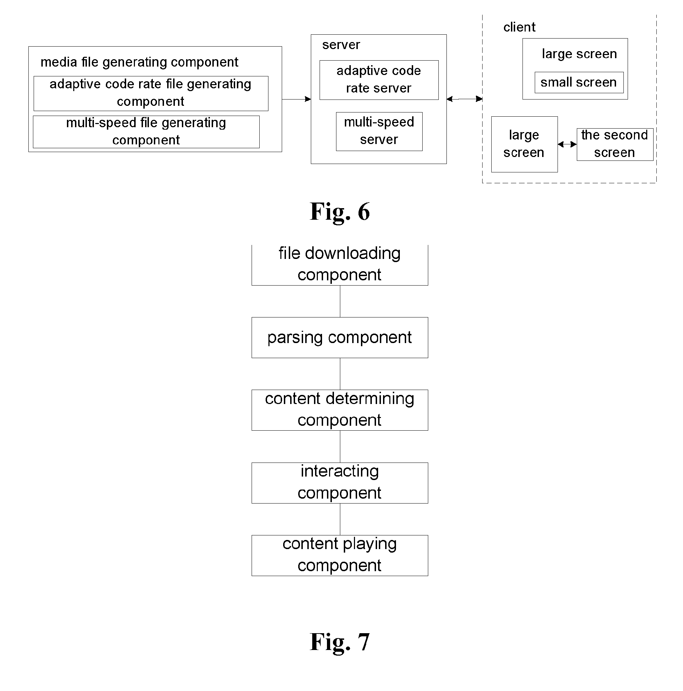

Fig. 6 is a structure diagram of a system for implementing adaptive streaming media multi-speed playing according to a second embodiment of the present invention; as shown in Fig. 6, the system for implementing adaptive streaming media multi-speed playing in the present preferred embodiment may include the following three parts: a media file generating component, a server and a client.

The media file generating component includes: an adaptive code rate file generating component, which is configured to generate media stripped files with different code rates, slave parsed files used for correspondingly recording information of each media stripped file with corresponding code rate and a master parsed file used for recording information of the slave parsed file, and a multi-speed file generating component (implementing the function of the generating component 52) which is configured to generate a multi-speed media stripped file, a slave parsed file used for correspondingly recording information of the multi-speed media stripped file and a master parsed file used for recording information of the slave parsed file.

The server is configured to store the media stripped file and the parsed file generated by the media file generating component, and respond to a request from the client; the multi-speed media file and the media file corresponding to the program played in the normal-speed can be stored in the same storage component of the server, they can also be stored in different storage components separately, wherein the storage component may be either logical virtual component or physical entity component. As a preferred implementation mode, the multi-speed media file of the program and the media file corresponding to the program played in the normal-speed can be stored in different storage components; preferably, the multi-speed media file of the program may be stored on a single server. In the present preferred embodiment, illustration is given by taking that the multi-speed media file is stored on the single multi-speed server for example, the server includes: an adaptive code rate server, which stores the media stripped file and the parsed file generated by the adaptive code rate file generating component; and a multi-speed server (implementing the function of the multi-speed server 42), which stores the stripped multi-speed file and the parsed file generated by the multi-speed file generating component.

The client (implementing the function of the client 20), which displays in two display modes: the large screen and the small screen, or the second screen.

The mode of the large screen and the small screen is that: the client interacts with the adaptive code rate server and the multi-speed server to perform adaptive code rate playing on the large screen while performing multi-speed playing on the small screen which is superposed, suspended or embedded on the large screen; preferably, when the user requests multi-speed playing, the small-screen window is displayed, and multi-speed playing is performed at the corresponding time point; when the user finds content of interest on the small-screen window, the user may hide the small-screen window while the large screen performs the normal adaptive code rate playing at the corresponding time point;
the mode of the second screen is that: the large-screen client interacts with the adaptive code rate server to perform adaptive code rate playing; the second-screen client interacts with the multi-speed server to perform multi-speed playing; preferably, when the user requests multi-speed playing, the second-screen client performs multi-speed playing at the corresponding time point; when the user finds content of interest on the second-screen client, the content is switched to the large-screen client to perform normal adaptive code rate playing.

Fig. 7 is a structure diagram of the client according to a second embodiment of the present invention; as shown in Fig. 7, whether the client is the client in the mode of the large screen and the small screen or the large-screen client and the second-screen client in the mode of the second screen, structure of the client may include the following components:
a file downloading component (implementing partial function of the first playing component 22 and the second playing component 24); the component takes charge of downloading the parsed file and the media stripped file in the server; preferably, by taking the mode of the second screen for example, for the large-screen client, the component is configured to download the media stripped files and the parsed files with different code rates in the adaptive code rate server; for the second-screen client, the component is configured to download the multi-speed media stripped file and the parsed file in the multi-speed server;
a parsing component (implementing partial function of the first playing component 22 and the second playing component 24); for the large-screen client or the second-screen client, the component is configured to parse the parsed file downloaded from the server, so as to obtain the information related to the media strip; preferably, by taking the second screen for example, the parsing component in the large-screen client may be configured to parse the master parsed file and the slave parsed file downloaded from the adaptive code rate server, so as to obtain program information, code rate information, the URL of each media stripped file with corresponding code rate and the length of time of the media; the parsing component in the second-screen client is configured to parse the master parsed file and the slave parsed file downloaded from the multi-speed server, so as to obtain program information, multi-speed, the URL of each multi-speed stripped file and the length of time of the media;
a content determining component (implementing the function of the acquiring element 242); the component takes charge of determining specific information of media strip that the client is about to download and play according to the parse result parsed by the parsing component or information acquired by an interacting component; by taking the second screen for example, for the large-screen client, the component is configured to determine the media file of which code rate is to be played, the time point of the current playing, and the URL of the media stripped file at the current time point; for the second-screen client, the component is configured to determine the time point of performing multi-speed playing currently, and the URL of the multi-speed media stripped file at the current time point;
an interacting component (implementing partial function of the playing element 244); the component is configured to perform interaction of adaptive code rate playing and multi-speed playing between the large-screen client and the second-screen client; by taking the second screen for example, for the large-screen client, the component takes charge of sending the time point of performing adaptive code rate playing currently, program information and multi-speed requested by the user to the second-screen client, and takes charge of acquiring information sent from the second-screen client; for the second-screen client, the component takes charge of sending the time point of performing multi-speed playing currently to the large-screen client, and takes charge of acquiring information sent from the large-screen client; in this way, when the user requests multi-speed on the large-screen client, information of the media played currently, the time point and multi-speed requested by the user can be transferred to the second-screen client through the component; after the interacting component of the second-screen client acquired these information, the URL of the multi-speed media stripped file to be played is determined through the content determining component, and then the file downloading component downloads the multi-speed media stripped file, at last, it is played by the content playing component; likewise, when the user browses the multi-speed media file through the second-screen client, if the user finds wonderful shot of interest, the shot can be easily switched to the large-screen client to be performed adaptive code rate playing at the corresponding time point; and
a content playing component (implementing partial function of the playing element 244); for the large-screen client and the second-screen client, the component is configured to decode and play the downloaded adaptive code rate media stripped file and multi-speed media stripped file.

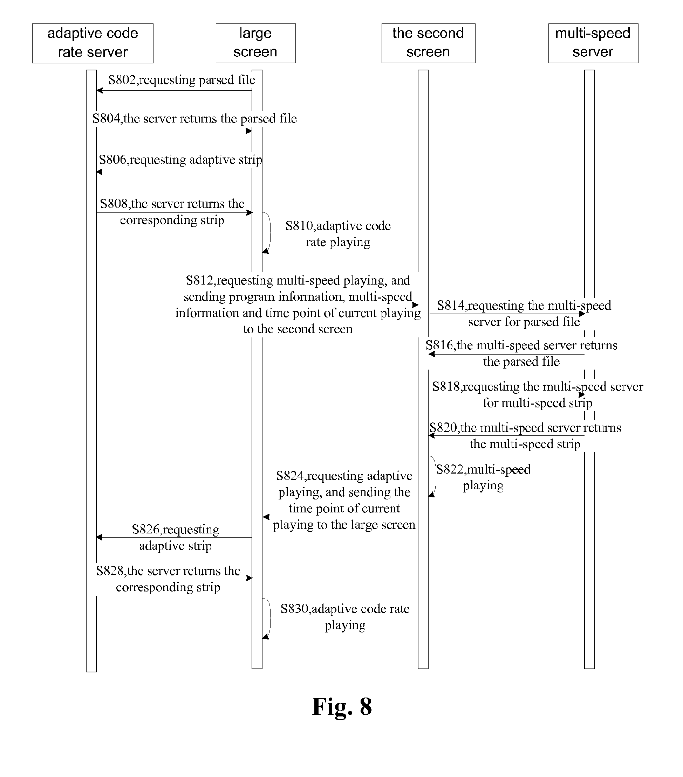

Fig. 8 is a flowchart of interaction between the client and the server according to a second embodiment of the present invention; as shown in Fig. 8, the flowchart takes the mode of the second screen for example, including that: firstly, the large-screen client performs adaptive code rate playing; and then, switching to the second-screen client to perform multi-speed playing; at last, when the user finds a part of interest, switching to the large-screen client again to play the part of interest in the adaptive code rate mode.

S802: the large-screen client requests the adaptive code rate server for parsed file through the file downloading component;

S804: the adaptive code rate server returns the parsed file requested by the large-screen client, then the parsing component parses it to acquire the specific information, like program information, code rate information, URL and length of time of strip, of each media stripped file with corresponding code rate in the adaptive code rate server;

S806: the large-screen client obtains the URL of media strip to be played through the content determining component, and then requests the adaptive code rate server for the media stripped file of specific code rate through the downloading component;

S808: the adaptive code rate server returns the stripped file requested by the large-screen client;

S810: the large-screen client decodes and exaggerates the requested stripped file through the content playing component; subsequently, the large-screen client keeps requesting, downloading from the adaptive code rate server and playing the stripped file of specific code rate through an adaptive policy, so as to implement adaptive code rate playing;

S812: when the user requests multi-speed, the large-screen client sends, through the interacting component, the program information of media played currently, the time point of current playing and multi-speed requested by the user to the interacting component in the second-screen client;

S814: the second-screen client obtains, through the interacting component, the program information of the multi-speed requested by the user, the multi-speed and the time point of current playing, and requests the multi-speed server for the parsed file;

S816: the multi-speed server returns the parsed file requested by the second-screen client, and obtains through the parsing component the specific information, like program information, the multi-speed, the URL and length of time of the multi-speed media strip, of the multi-speed media stripped file;

S818: the second-screen client uses the information acquired in S812 and S816 to determine through the content determining component the URL of the multi-speed media stripped file to be played and the time point to be played, and requests the multi-speed server for the media stripped file of specific multi-speed;

S820: the multi-speed server returns the multi-speed media stripped file requested by the second-screen client;

S822: the second-screen client plays through the content playing component the multi-speed media stripped file of corresponding time point which is returned in S820; subsequently, the second-screen client keeps requesting, downloading from the multi-speed server and playing the multi-speed media stripped file, so as to make the second-screen client keep performing multi-speed playing;

S824: when the user finds content of interest, performing the normal adaptive code rate playing; the second-screen client transmits through the interacting component the time point of current multi-speed playing to the large-screen client;

S826: after the interacting component of the large-screen client obtained information about the time point of current multi-speed playing, the content determining component determines the time point of adaptive code rate playing corresponding to the time point of multi-speed playing and the URL of media strip, and, the file downloading component requests the adaptive code rate server for the media stripped file of specific code rate;

S828: the adaptive code rate server returns the media stripped file requested by the large-screen client; and

S830: the large-screen client plays, through the content playing component, the media stripped file returned in S828 at the corresponding time point.

For the mode of the large screen and the small screen, the small screen and the large screen are just on the same terminal device; the terminal device may serve as the client, taking charge of interacting with the adaptive code rate server and the multi-speed server in the server; the interacting mode between the server and the client is also like the above basic flow, so it will not be repeated here.

The method and device for implementing adaptive streaming media multi-speed playing provided in the present preferred embodiment implement multi-speed playing in a service scenario of adaptive streaming media playing; and the user experience is greatly improved in the display mode of the client.

Note that, although the method, device and system for multi-speed playing provided in the present invention are illustrated by taking the mode of adaptive streaming media playing for example, they are not just applied to the mode of adaptive streaming media playing; the method and device for multi-speed playing provided in this specification can also be applied to the playing scenarios of other modes.

In another embodiment, software is also provided; the software is applied to implementing the technical solutions described in the above embodiments and the preferred embodiments.

In another embodiment, a storage medium is also provided; the storage medium stores the above software; the storage medium includes, but is not limited to, disk, floppy, hard disk, erasable memory and so on.

Obviously, the skilled personnel in the field should appreciate that above-mentioned components and steps of the present invention can be realized by a general-purpose computing device, and they can be centralized in a single computing device or distributed on a network composed of multiple computing devices; optionally, they can be realized by program code which is capable of being executed by the computing device, so that they can be stored in a storage device and executed by the computing device; in addition, under some conditions, the presented or described steps can be executed in an order different from that described here; or they are made into integrated circuit components, respectively; or multiple components and steps of them are made into a single integrated circuit component to realize. In this way, the present invention is not limited to any particular combination of hardware and software.

The above is only the preferred embodiment of the present invention and not intended to limit the present invention; for the skilled personnel in the field, the present invention may have various modifications and changes. Any modifications, equivalent replacements, improvements and the like within the spirit and principle of the present invention shall fall within the scope of the claims of the present invention.

## Claims

1. A method for multi-speed playing, **characterized by** comprising:
reading, by a client, a multi-speed media file of a program and playing the program on a second screen in a multi-speed mode, wherein the client comprises a first screen and the second screen; and
playing, by the client, the program on the first screen in a normal-speed mode.

2. The method according to claim 1, **characterized in that** while the program is played on the second screen in the multi-speed mode, it is played on the first screen in the normal-speed mode.

3. The method according to claim 1 or 2, **characterized in that** playing, by the client, the program on the first screen in the normal-speed mode comprises:
acquiring, by the client, a time point that is determined by a user to start to play in the normal-speed mode the program which is played on the second screen in the multi-speed mode; and
playing, by the client, the program in the normal-speed mode on the first screen from the time point.

4. The method according to any one of claims 1 to 3, **characterized in that**
the second screen is a window on the first screen; or,
the second screen is a screen of a terminal which is different from the terminal where the first screen is.

5. The method according to any one of claims 1 to 4, **characterized in that** before reading, by the client, the multi-speed media file of the program and playing the program on the second screen in the multi-speed mode, further comprising:
generating, by a server, multiple multi-speed media files with different multi-speeds to the program, wherein code rates of the multiple multi-speed media files with different multi-speeds are the same.

6. The method according to claim 5, **characterized in that** the code rate and/or resolution ratio of the multiple multi-speed media files with different multi-speeds is less than that of the media file corresponding to the program played in the normal-speed.

7. The method according to any one of claims 1 to 6, **characterized in that** reading, by the client, the multi-speed media file of the program and playing the program on the second screen in the multi-speed mode comprises:
reading, by the client, the multi-speed media file of the program from a multi-speed server and playing the program on the second screen in the multi-speed mode, wherein the multi-speed server is a server for storing the multi-speed media file of the program.

8. A device for multi-speed playing, located in a client, **characterized by** comprising:
a first playing component, configured to read a multi-speed media file of a program and play the program on a second screen in a multi-speed mode, wherein the client comprises a first screen and the second screen; and
a second playing component, configured to play the program on the first screen in a normal-speed mode.

9. The device according to claim 8, **characterized in that** the second playing component comprises:
an acquiring element, configured to acquire a time point that is determined by a user to start to play in the normal-speed mode the program which is played on the second screen in the multi-speed mode; and
a playing element, configured to play the program in the normal-speed mode on the first screen from the time point.

10. The device according to claim 8 or 9, **characterized in that**
the second screen is a window on the first screen; or,
the second screen is a screen of a terminal which is different from the terminal where the first screen is.

11. A system for multi-speed playing, **characterized by** comprising a device for multi-speed playing according to any one of claims 8 to 10, further comprising a server side; wherein the server side comprises:
a generating component, configured to generate multiple multi-speed media files with different multi-speeds to the program; wherein code rates of the multiple multi-speed media files with different multi-speeds are the same, and the code rate and/or resolution ratio of the multiple multi-speed media files with different multi-speeds is less than that of the media file corresponding to the program played in the normal-speed.

12. The system according to claim 11, **characterized in that** the server side comprises a multi-speed server and an adaptive code rate server; wherein the multi-speed server is configured to store the multi-speed media file of the program, and the adaptive code rate server is configured to store the media file corresponding to the program played in the normal-speed.
